(19) Europäisches Patentamt
European Patent Office
Office européen des brevets

(11) **EP 3 471 209 A2**

(12) **EUROPEAN PATENT APPLICATION**

(43) Date of publication:
**17.04.2019 Bulletin 2019/16**

(51) Int Cl.:
**H01Q 15/02** *(2006.01)*  **B29C 64/10** *(2017.01)*

(21) Application number: **18199338.7**

(22) Date of filing: **09.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.10.2017 US 201762571994 P**
**04.10.2018 US 201816151663**

(71) Applicant: **ETS-Lindgren Inc.**
**Cedar Park, TX 78613 (US)**

(72) Inventors:
• **COWARD, Justin**
**Round Rock, Texas 78664 (US)**
• **ADHYAPAK, Anoop**
**Austin, Texas 78727 (US)**
• **CHEN, Zhong**
**Cedar Park, Texas 78613 (US)**

(74) Representative: **Groth & Co. KB**
**P.O. Box 6107**
**102 32 Stockholm (SE)**

(54) **RF LENS AND METHOD OF MANUFACTURE**

(57) A method of manufacturing a radio frequency, RF, lens is provided. According to one aspect, a method includes additive manufacturing process to deposit material under computer control to form the lens in a predetermined shape. The method also includes controlling the process during deposition to generate a structure formed by cells, a cell size being selected to achieve a desired effective dielectric constant and to achieve a desired upper frequency of operation of the lens. According to another embodiment, a method includes implementing an additive manufacturing process to deposit material in a random manner under computer control to form the lens in a predetermined shape.

START

IMPLEMENT AN ADDITIVE MANUFACTURING PROCESS TO DEPOSIT MATERIAL UNDER COMPUTER CONTROL TO FORM THE LENS IN A PREDETERMINED SHAPE    S100

CONTROL THE PROCESS DURING DEPOSITION TO GENERATE AN ISOTROPIC STRUCTURE FORMED BY CLOSED CELLS, A CELL SIZE BEING SELECTED TO OBTAIN A PARTICULAR VOLUMETRIC RATIO OF AIR TO DEPOSITED MATERIAL TO ACHIEVE A DESIRED EFFECTIVE DIELECTRIC CONSTANT AND TO ACHIEVE A DESIRED UPPER FREQUENCY OF OPERATION OF THE LENS    S102

END    **Fig. 8**

EP 3 471 209 A2

**Description**

TECHNICAL FIELD

This disclosure relates to a method and system for manufacture of radio frequency lenses.

INTRODUCTION

Lens antennas have been widely studied due to their highly directional radiation, wide angle scanning and formed beam capabilities. These lenses may be shaped to transform spherical wave fronts into plane wave fronts to enhance directivity. The traditional fabrication approaches for dielectric lenses are dominated by using mechanical machining. These machining techniques remove or shape parts of raw materials using operations such as drilling and milling. This is time-consuming, labor intensive, costly and generates material waste.

In contrast to machining, additive manufacturing (AM) methods (also sometimes referred to as 3 dimensional printing), such as fused deposition modeling, construct successive layers of materials to create three-dimensional (3D) objects. With computer aided design (CAD) and computer aided manufacturing (CAM), it is possible to build rapid prototypes in almost any geometry and internal structure with minimal waste, minimal labor and comparatively low cost.

The advances in digital AM equipment and new materials enables 3D printing to produce lens antennas. For example, Zhang, S., "Design and Fabrication of 3D-printed Planar Fresnel Zone Plate Lens," Electronic Letters, 12 May 2016, Vol. 52, No. 10, pp. 833-835, describes additive manufacturing of a Fresnel lens operating at 10 GHz using a fused deposition modeling (FDM) process. The lens consists of planar concentric zones, having varying dielectric constants tailored by controlling the volume fraction of air voids in the structure.

As another example, Liang, et al., "A 3-D Luneberg Lens Antenna Fabricated by Polymer Jetting Rapid Prototyping," I.E.E.E. Transactions on Antennas and Propagation, Vol. 62, No. 4, April 2004, describes additive manufacturing of a Luneberg lens operable up to 20 GHz. Liang, *et al.*, describes the polymer jetting rapid prototype method as having the following steps. First, the CAD file of a designed object is converted into a series of layered slices. The data for each slice is received by the prototyping machine, slice by slice. A series of print heads of the prototyping machine deposit a thin layer of polymer made of two different ultraviolet-curable materials. The model to be constructed includes material regions and support material regions. The material regions receive an uncured acrylic polymer while the support regions receive an uncured water-soluble polymer. Upon jetting, both of the materials are immediately cured by the ultraviolet lamps on the print head. After one layer is completed, the construction stage is lowered by the width of the layer and the next layer is printed on top of the previously printed layer. When the entire structure is printed, the water-soluble support material of the structure is washed away using a high pressure water spray, leaving just the model material in the designed region.

In contrast to the polymer jetting process described in Liang, the Fused Deposition Modeling (FDM) process involves extruding small beads or streams of material which harden immediately to form layers. A filament of thermoplastic, metal wire, or other material, such as polylactic acid (PLA) is fed into an extrusion nozzle head, which heats the material and turns the flow on and off. The nozzle can be moved in both horizontal and vertical directions by a numerically controlled mechanism. The nozzle follows a path controlled by a computer-aided manufacturing (CAM) software package executed by a computer, and the part is built from the bottom up, one layer at a time. Stepper motors or servo motors are typically employed to move the extrusion head. The mechanism used is often an X-Y-Z rectilinear positioner, although other mechanical designs have been employed. The FDM process may cost much less than the polymer jetting process for a given object to be manufactured.

SUMMARY

Some embodiments advantageously provide a method and system for manufacturing a radio frequency, RF, lens is provided. According to one aspect, a method includes additive manufacturing process to deposit material under computer control to form the lens in a predetermined shape. The method also includes controlling the process during deposition to generate a structure formed by cells, a cell size being selected to obtain a particular volumetric ratio of air to deposited material to achieve a desired effective dielectric constant and to achieve a desired upper frequency of operation of the lens. According to another aspect, a method includes implementing an additive manufacturing process to deposit material in a random manner under computer control to form the lens in a predetermined shape.

BRIEF DESCRIPTION OF THE DRAWINGS

A more complete understanding of embodiments described herein, and the attendant advantages and features thereof, will be more readily understood by reference to the following detailed description when considered in conjunction with the accompanying drawings wherein:

FIG. 1 is a block diagram of a machine for implementing an FDM process;

FIG. 2 illustrates a octet cell that may be employed to build a lens;

FIG. 3 illustrates a cubic cell that may be employed to build the lens;

FIG. 4 is a graph of a volume ratio as a function of cell dimension for an octet cell;

FIG. 5 is a graph of a volume ratio as a function of cell dimension for a cubic cell;

FIG. 6 is an illustration of a lens constructed using octet cells;

FIG. 7 is an illustration of a lens constructed using the random spaghetti infill pattern;

FIG. 8 is a flowchart of an exemplary process for manufacturing an RF lens;

FIG. 9 is a flowchart of an exemplary process for manufacturing a lens using a random pattern of deposition;

FIG. 10 is a flowchart of an exemplary process for design and manufacture an RF lens;

FIG. 11 is a flowchart of another exemplary process for design and manufacture of an RF lens; and

FIG. 12 is a flowchart of an exemplary process for selecting cell size and determining volume ratio.

DETAILED DESCRIPTION

Before describing in detail exemplary embodiments, it is noted that the embodiments reside primarily in combinations of apparatus components and processing steps related to manufacture of RF lenses. Accordingly, the system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

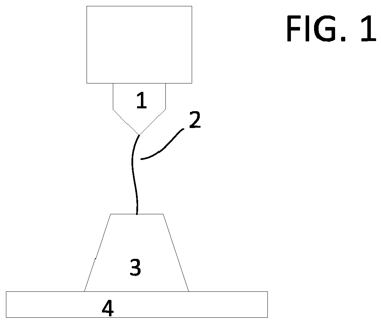

FIG. 1 is a block diagram of a machine for implementing an FDM process. The machine includes a print head 1 that extrudes a material 2 to construct a lens 3 resting on a base 4. The print head 1 is heated to melt the material being extruded. The print head 1 is positioned high enough above the lens to be constructed to enable the material 2 to be extruded in a cell shape and to fall in cell pattern, such as for octet, cubic or tetrahedral cells, for example, or in a random spaghetti infill pattern.

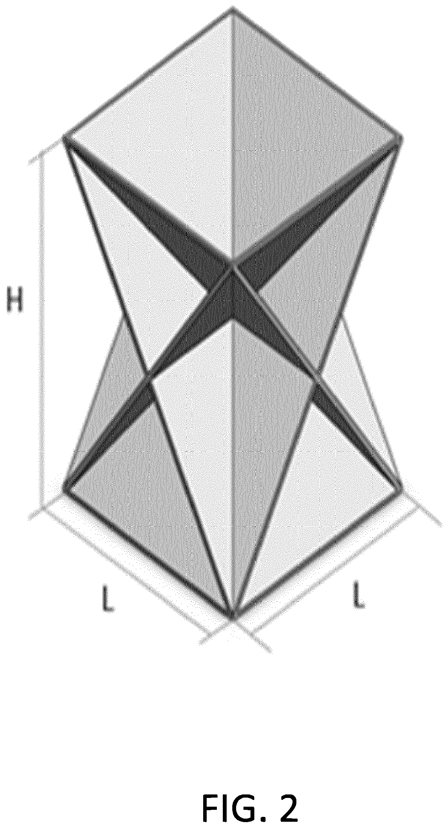

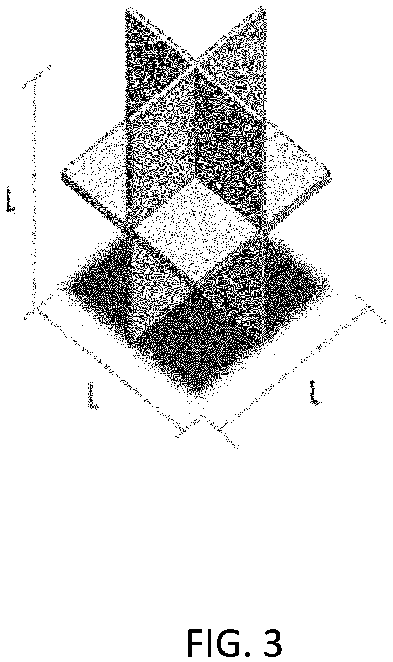

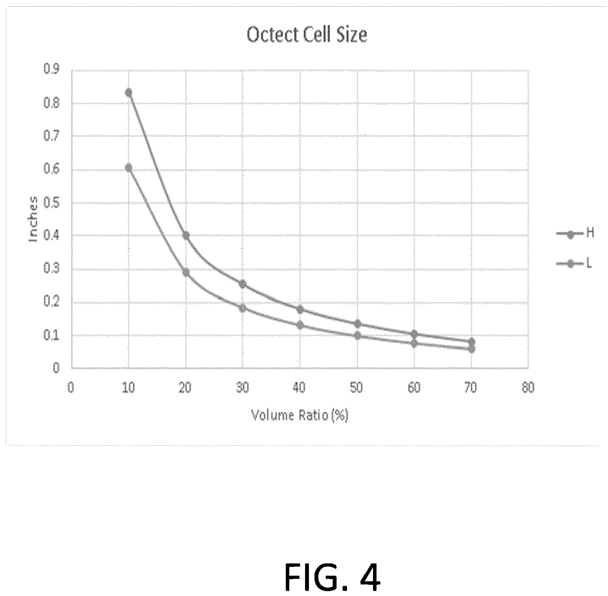

FIG. 2 illustrates an octet cell that may be employed to build the lens. The octet cell of FIG. 2 has a height H and a base of dimension L squared. FIG. 3 illustrates a cubic cell that may be employed to build the lens. The cubic cell of FIG. 3 has dimensions of L cubed. Other cells and dimensions may be employed. FIG. 4 is a graph of volume ratio versus cell dimension for an octet cell. The plotted values for height H and base dimension L are as follows:

TABLE 1

| Results | | |
|---|---|---|
| Volume Ratio (%) | H (in) | L (in) |
| 10 | 0.8337 | 0.6057 |
| 20 | 0.3993 | 0.2901 |
| 30 | 0.2537 | 0.1843 |
| 40 | 0.1803 | 0.1310 |
| 50 | 0.1355 | 0.0984 |
| 60 | 0.1048 | 0.0762 |
| 70 | 0.0819 | 0.0595 |

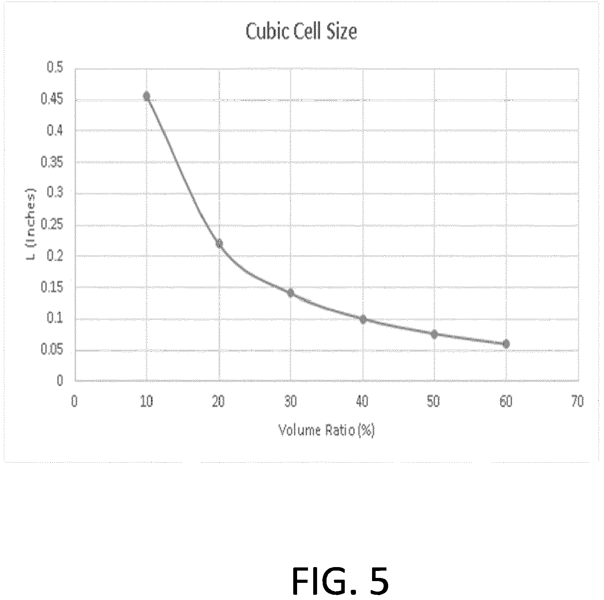

FIG. 5 is a graph of volume ratio versus cell dimension for a cubic cell. The plotted values for the dimension L are as follows:

TABLE 2

| Result | |
|---|---|
| Volume Ratio (%) | L (in) |
| 10 | 0.4563 |
| 20 | 0.2197 |
| 30 | 0.1405 |
| 40 | 0.1006 |
| 50 | 0.0763 |
| 60 | 0.0598 |

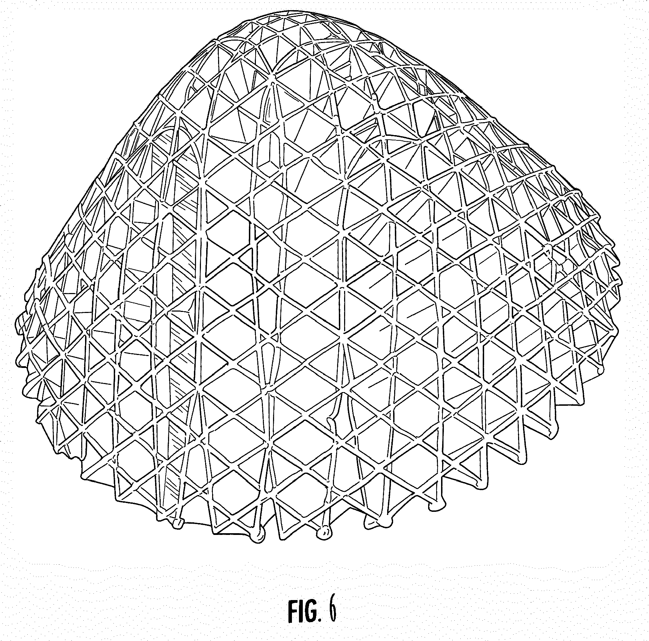

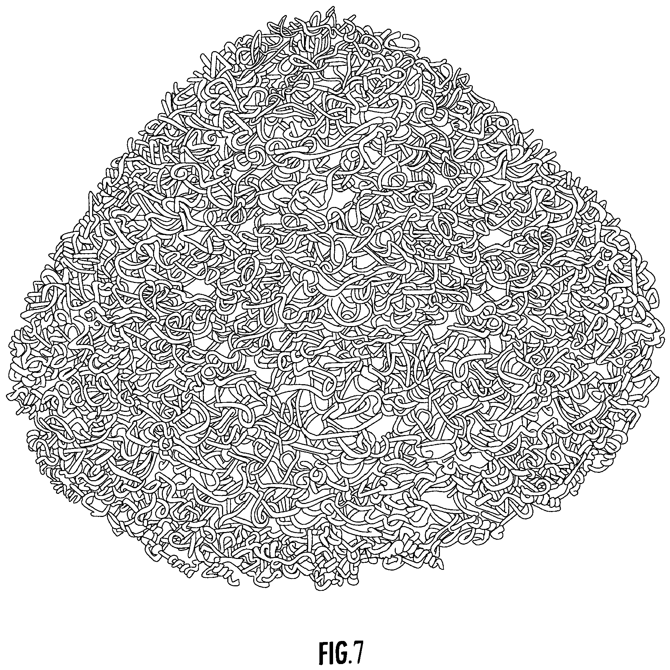

FIG. 6 is an illustration of a lens constructed using octet cells. FIG. 7 is an illustration of a lens constructed using the random spaghetti infill pattern.

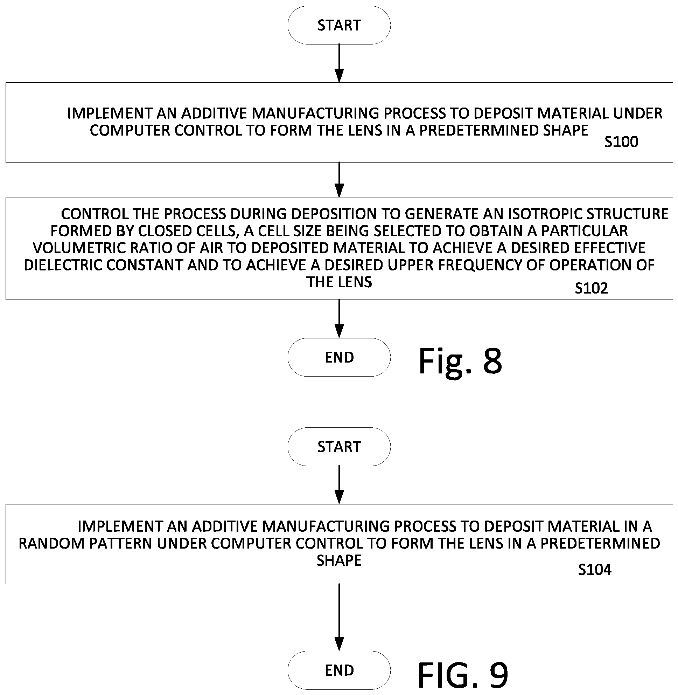

FIG. 8 is a flowchart of an exemplary process for manufacturing an RF lens. The process includes implementing a fused deposition modeling, FDM, additive manufacturing process to deposit material under computer control to form the lens in a predetermined shape (block 5100). The process also includes controlling the process during deposition to form closed cells, a cell size being selected to obtain a particular volumetric ratio of air to deposited material to achieve a desired effective dielectric constant and to achieve a desired upper frequency of operation of the lens (block S102).

FIG. 9 is a flowchart of an exemplary process for manufacturing a lens using a random pattern of deposition. The process includes implementing an additive manufacturing process to deposit material in a random pattern under computer control to form the lens in a predetermined shape (block S104).

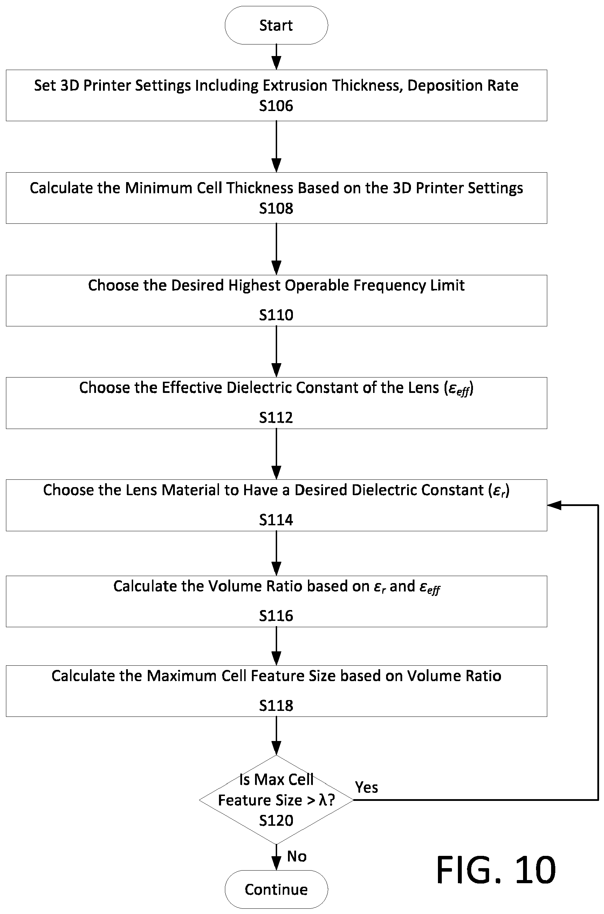

FIG. 10 is a flowchart of an exemplary process for manufacturing an RF lens. The process includes setting a 3D printer by specifying such parameters as extrusion thickness and deposition rate (block S106). The process includes calculating the minimum cell thickness based on the 3D printer settings (block S108). The process also includes choosing the desired highest frequency of operation of the lens (block S110). The effective dielectric constant of the lens is also chosen (block S112). The process also includes choosing a material having a desired dielectric constant (block S114). The process further includes calculating the volume ratio based on the dielectric constant of the material and the chosen effective dielectric constant (S116). The maximum cell feature size is calculated based on the volume ratio (block S118). If the maximum cell feature size is greater than a wavelength at the highest operating frequency (block S120) the process continues at block S114. Otherwise the process continues with manufacture of the lens according to the chosen and calculated parameters.

The dielectric permittivity of the lens material can be controlled by varying the air to material percentage ratio. The desired dielectric permittivity of the lens (for example 1.4) can be achieved with different base materials (relative dielectric constant > 1) by varying the air to material percentage ratio. Depending on the base material dielectric, the air gap size will vary: if the base material has lower dielectric, then the air gap size may be smaller whereas if the base material has higher dielectric, then the air gap size may be larger. This air gap size will define the upper frequency limit of operation (the air gap size should be less than the wavelength corresponding to the upper frequency limit).

Hence, for lens designs at lower frequency, where the structure can be huge, a base material with higher dielectric permittivity may be used, so that the desired dielectric permittivity of the lens can be achieved with larger air gap sizes resulting in a lightweight structure. Likewise, for lens designs at higher frequencies, where the structures will be smaller in size, base material with lower dielectric permittivity may be used, so that the desired dielectric of the lens can be achieved with smaller air gap sizes (as these are very small structures, the weight may not be an issue).

The wall thickness is controlled by the nozzle size on the 3d printer. A typical nozzle size is 0.4mm. The wall thickness can be changed in increments based on the nozzle size. Nozzle sizes down to 0.2 mm are currently available. In some embodiments, the wall thickness is not varied and the cell size is changed to achieve different effective dielectric constant and frequency performance. A thinner wall results in smaller cell sizes.

In one example, an RF conic lens as shown in FIG. 6 having the following dimensions can be constructed using a tetrahedral cell:

- Lens Base Diameter: 142mm
- Lens Depth (or Height): 64.34mm
- Pattern Wall thickness: 0.4mm
- Pattern Gap Size: 10.75mm

The relative dielectric constant of the fill material is 3.0 in this example. The printer used in this example is a T-Rex2+ by Formbot. This particular lens works well up to 26 GHz (wavelength is 11.5mm). The lens can be extended to up to 40 GHz (wavelength of 7.5mm) by lowering the dielectric permittivity of the base material and reducing the pattern gap size less than the wavelength of 7.5mm.

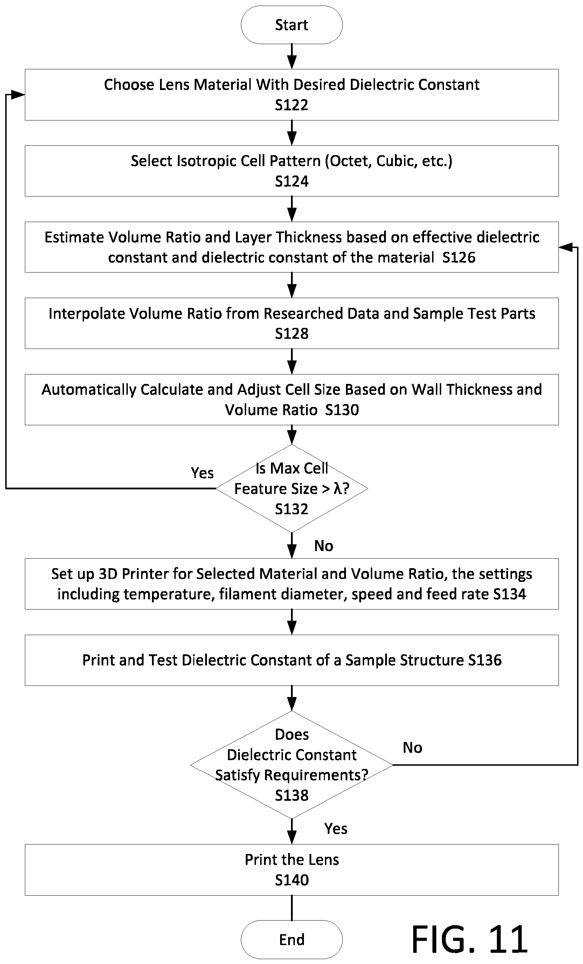

FIG. 11 is a flowchart of an exemplary process for design and manufacture of an RF lens. The process includes choosing lens material having a desired dielectric constant (block S122). An isotropic cell pattern is also chosen, such as octet, cubic, tetrahedral, etc., (block S124). An estimated volume ratio is determined and a layer thickness (which depends on the extrusion nozzle size) is selected based on a desired effective dielectric constant and dielectric constant of the material (block S126). A volume ratio value is determined by interpolation based on experimentation and evaluation of sample test parts, as will be explained further below (block S128). A computer is configured to calculate and adjust a cell size based on the wall thickness and volume ratio (block S130). If the maximum cell feature (such as H or L) is greater than a wavelength at the highest frequency of operation (block S132) then the process continues at block S122. Otherwise, the 3D printer is configured for printing with the selected material and determined volume ratio. Such settings include temperature, filament diameter, speed and material feed rate (block S134). A sample structure may be printed and its dielectric constant measured (block S136). If the measured dielectric constant does not match, at least approximately, the desired dielectric constant, (block S138) then the process continues at block S126. Otherwise, the printing of the lens proceeds (block S140).

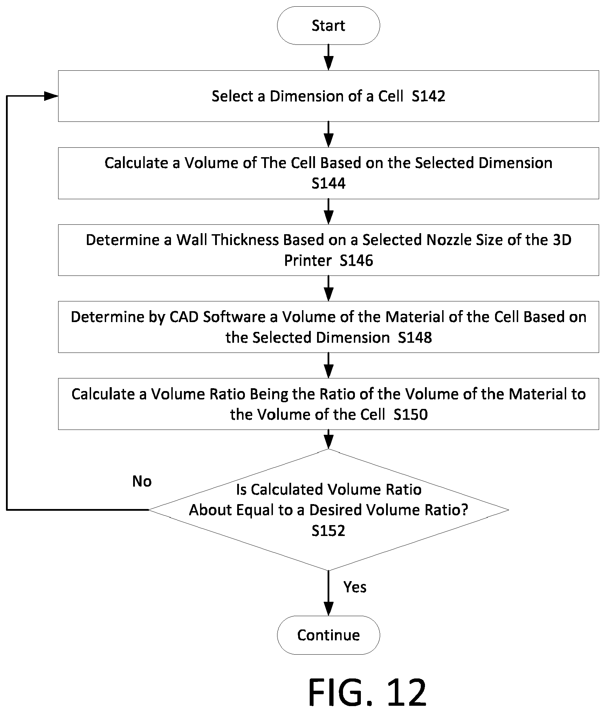

FIG. 12 is a flowchart of an exemplary process for selecting cell size and determining volume ratio. The process includes selecting a dimension (L or H, for example) of a cell (block S142). A volume of the cell is calculated based on the selected dimension (block S144). For example for an octet cell, the volume is given by:

$$Volume\ Cell = V_c = L \times L \times H$$

For the cubic cell, the volume is given by:

$$Volume\ Cell = V_c = L \times L \times L$$

A wall thickness is determined (selected based on a nozzle size of the 3D printer) (block S146). Using software such as computer aided design (CAD), a volume of the material is determined based on the selected dimension of the cell (block S148). A volume ratio for the octet cell is calculated as follows:

$$Volume\ Ratio = R = V_m/V_c = \frac{V_m}{L \times L \times H}$$

where $V_m$ is the volume of the material (block S150). The volume ratio for the cubic cell is calculated as follows:

$$Volume\ Ratio = R = V_m/V_c = \frac{V_m}{L^3}$$

If the calculated volume ratio, R, is not at least approximately equal to a desired volume ratio (block S152), then the process continues at block S142. Otherwise the process continues.

According to one approach, a model of the geometry of the cell is prepared using software such as Solidworks. A first value of the cell dimension, such as the cell height, is chosen and based on this value, a volume ratio is determined. Successive iterative values of the cell dimension are obtained until the resultant volume ratio matches, at least approximately, a desired volume ratio. Once the dimension that gives the desired volume ratio is determined, the cell dimensions are then known. (For the octet cell, L may be approximately equal to Hx0.7265).

Table 3 shows parameters and equations for an octet cell according to one design.

| Name | Value / Equation | Evaluates to | Comments |
|---|---|---|---|
| ⊟ Global Variables | | | |
| "H" | = 0.8336881 | 0.833688 | |
| "Volume Material" | = "SW-Volume" | 0.0305867 | |
| "Volume Cell" | = "L" * "L" * "H" | 0.305867 | |
| "Volume Ratio" | = "Volume Material" / "Volume Cell" | 0.1in | |
| "L" | = "D4@Sketch1" | 0.60570986in | |
| *Add global variable* | | | |
| ⊟ Features | | | |
| *Add feature suppression* | | | |
| ⊟ Equations | | | |
| "D1@Boss-Extrude1" | = "D4@Sketch1" | 0.60570986in | |
| "D3@Sketch1" | = "H" | 0.8336881in | |
| *Add equation* | | | |

Table 4 shows parameters and equations for a cubic cell according to another design.

| Name | Value / Equation | Evaluates to | Comments |
|---|---|---|---|
| ⊟ Global Variables | | | |
| "Volume Ratio" | = "Volume Material" / "Volume Cell" | 0.1in | |
| "Wall Thickness" | = 0.4mm | 0.015748in | |
| "Volume Cell" | = "L" * "L" * "L" | 0.0950203in | |
| "Volume Material" | = "SW-Volume" | 0.00950206 | |
| "L" | = 11.5906mm | 0.456323in | |
| *Add global variable* | | | |
| ⊟ Features | | | |
| *Add feature suppression* | | | |
| ⊟ Equations | | | |
| "D1@Sketch1" | = "L" | 0.45632283in | |
| "D1@Boss-Extrude1" | = "Wall Thickness" | 0.01574803in | |
| "D1@Sketch2" | = "L" | 0.45632283in | |
| "D1@Boss-Extrude2" | = "Wall Thickness" | 0.01574803in | |
| "D1@Sketch3" | = "L" | 0.45632283in | |
| *Add equation* | | | |

Thus, in some embodiments, a method of manufacturing a radio frequency, RF, lens, is provided. The method includes implementing an additive manufacturing process to deposit material under computer control to form the lens in a predetermined shape. The method also includes controlling the process during deposition to generate a structure formed by cells, a cell size being selected to achieve a desired effective dielectric constant and to achieve a desired upper frequency of operation of the lens.

According to this aspect, in some embodiments, in some embodiments, the method further includes controlling a maximum cell dimension to be less than a wavelength of a highest frequency of operation of the lens. In some embodiments, the method further includes selecting the cell size and wall thickness to achieve a desired strength and a desired effective dielectric constant. In some embodiments, the method also includes selecting the cell size to control a density of the lens. In some embodiments, the method also includes using one of cubic, octet and tetrahedral cells to form a closed cell construction of the lens. In some embodiments, the process involves deposition of material using a cell structure and allowing the material to fall randomly to form a random spaghetti infill. In some embodiments, the method further includes selecting a cell dimension to achieve a desired ratio of material volume to cell volume. In some embodiments, the lens is isotropic. In some embodiments, the lens is conical.

According to another aspect, a method of manufacturing an isotropic broad band radio frequency, RF, lens is provided. The method includes implementing an additive manufacturing process to deposit material in a random manner under computer control to form the lens in a predetermined shape. According to this aspect, in some embodiments, the random manner of deposition results in isotropy. In some embodiments, one of cubic, octet and tetrahedral cells are deposited to fall randomly to form the lens. In some embodiments, the method further includes, controlling a maximum dimension of a cell structure of the deposited material to be less than a wavelength of a highest frequency of operation of the lens. In some embodiments, the method further includes selecting a cell size and wall thickness to achieve a desired strength and a desired effective dielectric constant. In some embodiments, the method further includes selecting a cell size to control a density of the lens.

According to yet another aspect, a method of manufacturing a radio frequency, RF, lens using an additive manufacturing process is provided. The method includes selecting a highest frequency of operation of the RF lens, selecting an effective dielectric constant of the RF lens, selecting a material having a desired dielectric constant, and selecting a cell structure The method also includes iteratively choosing a cell dimension and computing a ratio of a volume of material to a volume of the cell based on the chosen cell dimension until a desired ratio is achieved. The method includes selecting the cell dimension that achieves the desired ratio, and selecting one of a deposition rate and an extrusion rate of the selected material. The method further includes depositing, under control of a computer, the selected material according to a deposition pattern, and a rate of one of deposition and extrusion, according to the selected cell dimension and cell structure to achieve the selected frequency of operation and, approximately, the effective dielectric constant.

According to this aspect, the cell dimension is selected to obtain a volumetric ratio of air to deposited material to achieve the selected effective dielectric constant of the RF lens. In some embodiments, the method includes selecting a size of the RF lens. In some embodiments, selecting the material includes selecting a dielectric constant to achieve a desired size of the RF lens while also achieving approximately the selected effective dielectric constant of the RF lens. In some embodiments, an air to material percentage ratio is chosen to achieve a desired lens size having the selected effective dielectric constant.

Some embodiments include a method of manufacturing a radio frequency lens. The method includes iteratively computing a volume ratio, the computed volume ratio being a ratio of a volume of material to a volume of a cell to be constructed by an additive manufacturing process implemented by a 3D printer, the computed volume ratio being based on a selected cell dimension, the cell dimension being iteratively selected until a desired computed volume ratio is achieved.

According to this aspect, in some embodiments, the computed volume ratio is computed by a computer program that receives as an input, the selected cell dimension. In some embodiments, dimensions of the cell are based on the selected cell dimension that results in the desired computed volume ratio. In some embodiments, the computed volume ratio depends on an effective dielectric constant and a dielectric constant of material used to manufacture the lens. In some embodiments, if a selected cell dimension that results in the desired computed volume ratio exceeds a wavelength at a highest frequency of operation of the lens, then a material with a higher dielectric constant is chosen and the iterative computing of the volume ratio is repeated.

According to another aspect, a method of manufacturing a radio frequency lens is provided. The method includes choosing a material having a first dielectric constant, determining a wall thickness of a cell to be constructed by an additive manufacturing process, selecting a value of a dimension of the cell and calculating a volume of the cell based on the selected dimension. The method further includes determining a volume of material to be used to make the cell based on the selected first cell dimension, wall thickness, a structure of a cell and the first dielectric constant. The method also includes calculating a volume ratio that is a ratio of the volume of the material to the volume of the cell. If a difference between the calculated volume ratio and a desired volume ratio exceeds a threshold then another value of the dimension of the cell is selected and another volume ratio is computed. The method further includes repeating the selecting of the cell dimension value and the calculating of the volume ratio until a final cell dimension results in the difference between the calculated volume ratio and the desired volume ratio being less than the threshold.

According to this aspect, in some embodiments, if the final cell dimension value is greater than a wavelength at a highest frequency of operation of the lens, then choosing a lens material having a higher dielectric constant than the first dielectric constant. In some embodiments, the method further includes printing a sample structure and measuring a dielectric constant of the sample structure before printing the lens. In some embodiments, when the difference is less than the threshold, and the final cell dimension is less than a wavelength of the highest frequency of operation of the lens, the lens is printed with cells having the final cell dimension. In some embodiments, the method further includes choosing an effective dielectric constant of the lens upon which the computation of the volume of material is based.

According to yet another aspect, a computer controlled printing process for printing a radio frequency lens according to an algorithm that receives as an input geometry data from a computer aided design program is provided. The process includes iteratively computing a volume ratio, the computed volume ratio being a ratio of a volume of material to a volume of a cell to be constructed by an additive manufacturing process implemented by a 3D printer, the computed volume ratio being based on a selected cell dimension, the cell dimension being iteratively selected until a desired computed volume ratio is achieved. The process further includes printing the lens using cells having dimensions that are determined to result in the desired computed volume ratio.

According to this aspect, the computed volume ratio is computed by a computer program that receives as an input, the selected cell dimension. In some embodiments, dimensions of the cell are based on the selected cell dimension that results in the desired computed volume ratio. In some embodiments, the computed volume ratio depends on an effective dielectric constant and a dielectric constant of material used to manufacture the lens. In some embodiments, if a selected cell dimension that results in the desired computed volume ratio exceeds a wavelength at a highest frequency of operation of the lens, then a material with a higher dielectric constant is chosen and the iterative computing of the volume ratio is repeated.

Some embodiments include the following:

Embodiment 1. A method of manufacturing an isotropic broad band radio frequency, RF, lens, the method comprising:

implementing an additive manufacturing process to deposit material under computer control to form the lens in a predetermined shape;

controlling the process during deposition to generate an isotropic structure formed by closed cells, a cell size being selected to obtain a particular volumetric ratio of air to deposited material to achieve a desired effective dielectric constant and to achieve a desired upper frequency of operation of the lens.

Embodiment 2. The method of Embodiment 1, further comprising controlling a cell size to be less than a wavelength of a frequency of operation such that the highest frequency of operation is greater than about 40 GHz.

Embodiment 3. The method of Embodiment 2, further comprising selecting the cell size and wall thickness to achieve a desired strength and effective dielectric.

Embodiment 4. The method Embodiment 2, further comprising selecting the cell size to control a density of the lens.

Embodiment 5. The method of Embodiment 2, further comprising using one of cubic and tetrahedral cells to form a closed cell construction of the lens.

Embodiment 6. The method of Embodiment 1, wherein the process involves deposition of material using a cell structure and allowing the material to fall randomly to form a random spaghetti infill.

Embodiment 7. The method of Embodiment 5, wherein a print head for extruding the material is controlled to move in a random path.

Embodiment 8. The method of Embodiment 1, wherein the lens is isotropic.

Embodiment 9. The method of Embodiment 1, wherein the additive manufacturing process is a fused deposition modeling (FDM) process.

Embodiment 10. A method of manufacturing an isotropic broad band radio frequency, RF, lens, the method comprising:
implementing an additive manufacturing process to deposit material in a random manner under computer control to form the lens in a predetermined shape.

Embodiment 11. The method of Embodiment 10, wherein the random manner of deposition results in isotropy.

Embodiment 12. The method of Embodiment 10, wherein one of cubic and tetrahedral cells are deposited to fall randomly to form the lens.

It will be appreciated by persons skilled in the art that the present embodiments are not limited to what has been particularly shown and described herein above. In addition, unless mention was made above to the contrary, it should be noted that all of the accompanying drawings are not to scale. A variety of modifications and variations are possible in light of the above teachings.

**Claims**

1.   A method of manufacturing a radio frequency, RF, lens, the method comprising:

   implementing an additive manufacturing process to deposit material under computer control to form the lens in a predetermined shape;
   controlling the process during deposition to generate a structure formed by cells, a cell size being selected to achieve a desired effective dielectric constant and to achieve a desired upper frequency of operation of the lens.

2.   The method of Claim 1, further comprising controlling a maximum cell dimension to be less than a wavelength of a highest frequency of operation of the lens.

3.   The method of any of Claims 1 and 2, further comprising selecting the cell size and wall thickness to achieve a desired strength and a desired effective dielectric constant.

4.   The method of any of Claims 1-3, further comprising selecting the cell size to control a density of the lens.

5.   The method of any of Claims 1-4, further comprising using one of cubic, octet and tetrahedral cells to form a closed cell construction of the lens.

6.   The method of any of Claims 1-5, wherein the process involves deposition of the material by allowing the material to fall randomly to form a random spaghetti infill.

7.   The method of any of Claims 1-6, further comprising selecting a cell dimension to achieve a desired ratio of material volume to cell volume.

8.   A method of manufacturing an isotropic broad band radio frequency, RF, lens, the method comprising:

   implementing an additive manufacturing process to deposit material in a random manner under computer control to form the lens in a predetermined shape.

9.   The method of Claim 8, wherein one of cubic, octet and tetrahedral cells are deposited to fall randomly to form the lens.

10.   The method of any of Claims 8 and 9, further comprising controlling a maximum dimension of a cell structure of the deposited material to be less than a wavelength of a highest frequency of operation of the lens.

11.   The method of any of Claims 8-10, further comprising selecting a cell size and wall thickness to achieve a desired strength and a desired effective dielectric constant.

12.   A method of manufacturing a radio frequency, RF, lens using an additive manufacturing process, the method comprising:

   selecting a highest frequency of operation of the RF lens;
   selecting an effective dielectric constant of the RF lens;
   selecting a material having a desired dielectric constant;
   selecting a cell structure;
   iteratively choosing a cell dimension and computing a ratio of a volume of material to a volume of the cell based on the chosen cell dimension until a desired ratio is achieved;
   selecting the cell dimension that achieves the desired ratio;
   selecting one of a deposition rate and an extrusion rate of the selected material; and
   depositing, under control of a computer, the selected material according to a deposition pattern, and a rate of one of deposition and extrusion, according to the selected cell dimension and cell structure to achieve the selected frequency of operation and, approximately, the effective dielectric constant.

**13.** The method of Claim 12, wherein the cell dimension is selected to obtain a volumetric ratio of air to deposited material to achieve the selected effective dielectric constant of the RF lens.

**14.** The method of any of Claims 12 and 13, wherein selecting the material includes selecting a dielectric constant to achieve a desired size of the RF lens while also achieving approximately the selected effective dielectric constant of the RF lens.

**15.** The method of any of Claims 12-14, wherein an air to material percentage ratio is chosen to achieve a desired lens size having the selected effective dielectric constant.

FIG. 1

1

2

3

4

FIG. 2

FIG. 3

FIG. 4

FIG. 5

FIG. 6

FIG.7

START

IMPLEMENT AN ADDITIVE MANUFACTURING PROCESS TO DEPOSIT MATERIAL UNDER COMPUTER CONTROL TO FORM THE LENS IN A PREDETERMINED SHAPE    S100

CONTROL THE PROCESS DURING DEPOSITION TO GENERATE AN ISOTROPIC STRUCTURE FORMED BY CLOSED CELLS, A CELL SIZE BEING SELECTED TO OBTAIN A PARTICULAR VOLUMETRIC RATIO OF AIR TO DEPOSITED MATERIAL TO ACHIEVE A DESIRED EFFECTIVE DIELECTRIC CONSTANT AND TO ACHIEVE A DESIRED UPPER FREQUENCY OF OPERATION OF THE LENS    S102

END    Fig. 8

START

IMPLEMENT AN ADDITIVE MANUFACTURING PROCESS TO DEPOSIT MATERIAL IN A RANDOM PATTERN UNDER COMPUTER CONTROL TO FORM THE LENS IN A PREDETERMINED SHAPE    S104

END    FIG. 9

Start

Set 3D Printer Settings Including Extrusion Thickness, Deposition Rate
S106

Calculate the Minimum Cell Thickness Based on the 3D Printer Settings
S108

Choose the Desired Highest Operable Frequency Limit
S110

Choose the Effective Dielectric Constant of the Lens ($\varepsilon_{eff}$)
S112

Choose the Lens Material to Have a Desired Dielectric Constant ($\varepsilon_r$)
S114

Calculate the Volume Ratio based on $\varepsilon_r$ and $\varepsilon_{eff}$
S116

Calculate the Maximum Cell Feature Size based on Volume Ratio
S118

Is Max Cell Feature Size > λ?
S120

Yes

No

Continue

FIG. 10

Start

Choose Lens Material With Desired Dielectric Constant
S122

Select Isotropic Cell Pattern (Octet, Cubic, etc.)
S124

Estimate Volume Ratio and Layer Thickness based on effective dielectric
constant and dielectric constant of the material  S126

Interpolate Volume Ratio from Researched Data and Sample Test Parts
S128

Automatically Calculate and Adjust Cell Size Based on Wall Thickness and
Volume Ratio  S130

Yes — Is Max Cell Feature Size > $\lambda$? S132

No

Set up 3D Printer for Selected Material and Volume Ratio, the settings
including temperature, filament diameter, speed and feed rate S134

Print and Test Dielectric Constant of a Sample Structure S136

Does Dielectric Constant Satisfy Requirements? S138 — No

Yes

Print the Lens
S140

End

FIG. 11

Start

Select a Dimension of a Cell  S142

Calculate a Volume of The Cell Based on the Selected Dimension
S144

Determine a Wall Thickness Based on a Selected Nozzle Size of the 3D
Printer  S146

Determine by CAD Software a Volume of the Material of the Cell Based on
the Selected Dimension  S148

Calculate a Volume Ratio Being the Ratio of the Volume of the Material to
the Volume of the Cell  S150

No    Is Calculated Volume Ratio
About Equal to a Desired Volume Ratio?
S152

Yes

Continue

# FIG. 12

## REFERENCES CITED IN THE DESCRIPTION

**Non-patent literature cited in the description**

- **ZHANG, S.** Design and Fabrication of 3D-printed Planar Fresnel Zone Plate Lens. *Electronic Letters,* 12 May 2016, vol. 52 (10), 833-835

- **LIANG et al.** A 3-D Luneberg Lens Antenna Fabricated by Polymer Jetting Rapid Prototyping. *I.E.E.E. Transactions on Antennas and Propagation,* April 2004, vol. 62 (4